# EUROPEAN PATENT APPLICATION

(11) **EP 0 889 204 A2**
(43) Date of publication of application: **07.01.1999**
(21) Application number: 98112070.2
(22) Date of filing: 30.06.1998
(51) Int. Cl.: F01K 23/10

(54) **Combined cycle power generation plant**

(30) Priority: 02.07.1997 JP 176945/97
(71) Applicant: Mitsubishi Heavy Industries, Ltd., Tokyo (JP)
(72) Inventor: Wakazono, Osamu, c/o Mitsubishi Heavy Ind. Ltd., Chiyoda-ku, Tokyo (JP); Fukuizumi, Yasushi, c/o Mitsubishi Heavy Ind. Ltd., Arai-cho, Takasago-shi, Hyogo-ken (JP)
(74) Representative: Henkel, Feiler, Hänzel

(57) **Abstract**

While, in a prior art combined cycle power generation plant, steam which is needed at the time of restart of the plant after the plant has been once stopped must be supplied from outside auxiliary boiler which requires additional facilities resulting in complexity of plant, high cost, troublesome operation, etc., the present invention provides such a plant that is able to secure the steam needed at the time of restart of the plant and to shorten the time for the plant to reach a full load.

The combined cycle power generation plant comprises a waste heat recovery boiler (20) in which a stabilizing burner (25) is incorporated at an upstream position thereof. The stabilizing burner is ignited during the time of start-up and speed lifting of gas turbine (11) so that steam generation at the waste heat recovery boiler is accelerated and the steam is made use of effectively for cooling of gas turbine and steam turbine, and further for gland steam and the like, and the time for the plant to reach a full load can be shortened.

## Description

### BACKGROUND OF THE INVENTION:

### Field of the Invention:

The present invention relates to a combined cycle power generation plant, constructed by combining a gas turbine plant and a steam turbine plant, in which a stabilizing burner is incorporated in a waste heat recovery boiler thereof.

### Description of the Prior Art:

A combined cycle power generation plant is a power generation system constructed by combining a gas turbine plant and a steam turbine plant and a high temperature range of its thermal energy is taken charge of by the gas turbine and a low temperature range of same by the steam turbine, thus the thermal energy is recovered and made use of effectively with result that said power generation system has come to be widely used recently.

In such combined cycle power generation plant, it is an active tendency to employ a steam cooling method for cooling the gas turbine, steam turbine, etc. using a cooling medium of steam generated in its own cycle.

That is, according to said steam cooling method, a high temperature portion of the gas turbine, for example, which is to be cooled is cooled by steam and the thermal energy obtained thereby is recovered by the steam turbine of a bottom cycle, so that a highly advantageous system having an enhanced thermal efficiency can be obtained.

However, in order to effect a restart of the plant, after the plant has been once stopped, such as for a plant start-up after completion of inspection work etc., a weekly start and stop (WSS) in which start and stop of operation are done in a unit of week, a daily start and stop (DSS) in which start and stop of operation are done in a unit of day and the like, it is a present situation that the steam for cooling must be obtained from outside of the plant own cycle, such as by depending on the steam from an auxiliary boiler which is installed outside.

In order to obtain the steam, which is needed at the time of restart of the plant after the plant has been once stopped, from the outside auxiliary boiler, as mentioned above, there are needed various additional facilities resulting in complexity of plant, high cost, troublesome operation, etc.

Avoiding dependence on the auxiliary boiler, if such a method is selected as only waiting for steam generation at the waste heat recovery boiler while the gas turbine is held in start-up and speed lifting, then there occurs an unfavorable situation from view point of resonance of compressor and turbine blades.

### SUMMARY OF THE INVENTION:

In order to dissolve the problems in the prior art as mentioned above, it is an object of the present invention to provide a combined cycle power generation plant which is able to secure steam needed at the time of restart of a plant after the plant has been once stopped and moreover to shorten the time for the plant to reach a full load from the start-up.

In order to attain said object, it is a feature of the present invention to provide a combined cycle power generation plant constructed by combining a gas turbine plant and a steam turbine plant and comprising a waste heat recovery boiler for generating steam for driving the steam turbine by use of waste heat of the gas turbine, characterized in that a stabilizing burner is incorporated at an upstream position in said waste heat recovery boiler.

That is, the stabilizing burner, which is incorporated at the upstream position in the waste heat recovery boiler, is ignited during the time of start-up and speed lifting of the gas turbine so that generation of steam at the waste heat recovery boiler is accelerated, thus said steam is made use of effectively for cooling of the gas turbine and cooling of the steam turbine and further for a gland steam and the like and moreover the time for the plant to reach a full load can be shortened.

It is another feature of the present invention to provide a combined cycle power generation plant as mentioned above, characterized in that said stabilizing burner provided in said waste heat recovery boiler is constructed such that said stabilizing burner is supplied with fuel from a fuel supply source which is common to a combustor of the gas turbine.

It is also a feature of the present invention to provide a combined cycle power generation plant as first mentioned above, characterized in that said stabilizing burner provided in said waste heat recovery boiler is constructed such that said stabilizing burner is supplied with fuel from a fuel supply source which is different from a fuel supply source of a combustor of the gas turbine.

### BRIEF DESCRIPTION OF THE DRAWINGS:

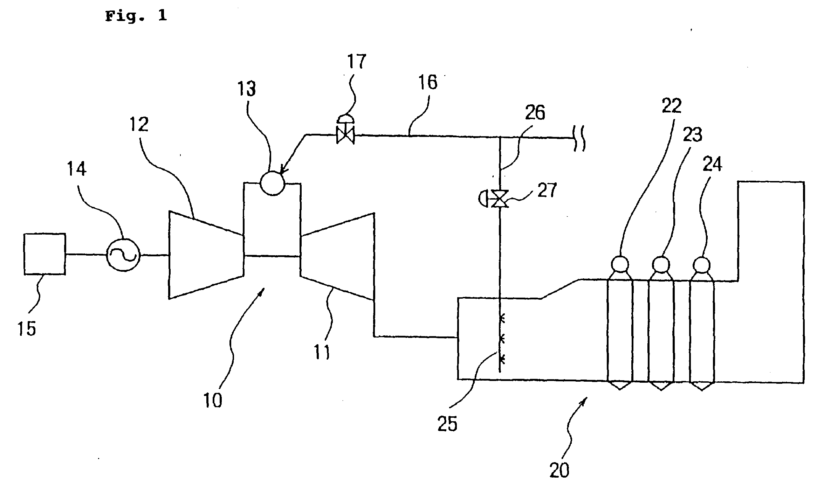

Fig. 1 is an explanatory view showing schematically a main part of a combined cycle power generation plant of one embodiment according to the present invention.

### DESCRIPTION OF THE PREFERRED EMBODIMENTS:

One embodiment according to the present invention will be described with reference to Fig. 1. Fig. 1 shows schematically a gas turbine portion and a waste heat recovery portion constituting a portion of a combined cycle power generation plant, wherein a steam turbine portion constituting a remaining portion thereof is not shown.

Numeral 10 designates a gas turbine plant which comprises a gas turbine 11, an air compressor 12 which is shaft-jointed directly to the gas turbine 11, a combustor 13 which is supplied with compressed air from the air compressor 12 for combustion of fuel to be supplied from other source and supplying the gas turbine 11 with operation gas, etc.

Also, a generator 14 is shaft-jointed to an end of the other side of the air compressor 12 and a starting apparatus 15 is connected to the generator 14.

Numeral 16 designates a fuel supply pipe and numeral 17 designates a control valve disposed in the supply pipe 16 for controlling supply amount of fuel to be supplied to the combustor 13.

Numeral 20 designates a waste heat recovery boiler which comprises naturally an economizer, a superheater, a reheater, etc. but illustration of these devices is omitted and only a high pressure drum 22, a medium pressure drum 23 and a low pressure drum 24 are shown representatively.

Numeral 25 designates a stabilizing burner which is disposed at an upstream position, preferably at an upstream position of the superheater or the reheater, illustration of which has been omitted, in the waste heat recovery boiler 20.

Further, numeral 26 designates a fuel supply pipe for supplying the stabilizing burner 25 with fuel. On a downstream side of the fuel supply pipe 26, there is disposed a control valve 27 and an upstream end of the fuel supply pipe 26 joins to the fuel supply pipe 16 for the combustor 13. It is needless to mention, however, that the fuel supply pipes 16 and 26, respectively, may be connected to respective fuel supply sources separately.

In the present embodiment constructed as above, in order to effect a restart of plant after the plant has been once stopped, such as for a plant start-up after completion of inspection work etc., for a WSS or DSS in which start and stop of operation are done in a unit of week or day and the like, the gas turbine 11 is started at first by the starting apparatus 15 via the air compressor 12 etc. and the stabilizing burner 25 is ignited during the time of spin rotation by the starting apparatus 15 so that heating of the waste heat recovery boiler 20 is started therewith.

Corresponding to the gas turbine 11 which is speed lifted and load-increased as time passes, fuel supplied to the stabilizing burner 25 is controlled so that heating of the waste heat recovery boiler 20 by the stabilizing burner 25 is regulated.

According to the present embodiment, the stabilizing burner 25 is provided as mentioned above, thereby temperature of inflow gas to the waste heat recovery boiler 20 can be maintained to a rated state from the time of start and steam generation at the waste heat recovery boiler 20 is accelerated so that the steam so generated can be used quickly as a cooling medium for the gas turbine 11 or a steam turbine which is not shown or as a gland steam and the like.

Moreover, because the cooling steam can be secured so quickly as mentioned above, if the system of gas turbine 11 is seen for example, speed lifting and load increase can be quickened and time for reaching a full load operation can be shortened.

Also, the stabilizing burner 25 is so incorporated in the waste heat recovery boiler 20, thereby help of an auxiliary steam from the auxiliary boiler becomes unnecessary which results in no need of providing a particular surrounding piping system for the auxiliary steam and the plant can be simplified greatly as a whole.

The present invention has been described with respect to the embodiment but the present invention is not to be limited to that embodiment but, needless to mention, may be added with various modifications in its concrete structure within the scope of the claims as set forth hereinbelow.

According to the present invention, provided is a combined cycle power generation plant constructed by combining a gas turbine plant and a steam turbine plant and comprising a waste heat recovery boiler for generating steam for driving the steam turbine by use of waste heat of the gas turbine, characterized in that a stabilizing burner is incorporated at an upstream position in said waste heat recovery boiler, thereby the stabilizing burner, which is ignited during the time of start-up and speed lifting of the gas turbine, accelerates generation of steam at the waste heat recovery boiler and this steam is made use of effectively for cooling of the gas turbine and cooling of the steam turbine and further for a gland steam and the like and the time for the plant to reach a full load can be shortened.

Moreover, according to the present invention so constructed, there is no need of being supplied with an auxiliary steam from an auxiliary boiler which results in no need of providing a particular surrounding piping system for the auxiliary steam and, owing to simplification of the plant, economic effect thereof can be enhanced greatly.

## Claims

1. A combined cycle power generation plant constructed by combining a gas turbine (11) plant and a steam turbine plant and comprising a waste heat recovery boiler (20) for generating steam for driving the steam turbine by use of waste heat of the gas turbine (11), characterized in that a stabilizing burner (25) is incorporated at an upstream position in said waste heat recovery boiler (20).

2. A combined cycle power generation plant as claimed in Claim 1, characterized in that said stabilizing burner (25) provided in said waste heat recovery boiler (20) is constructed such that said stabilizing burner (25) is supplied with fuel from a fuel supply source which is common to a combustor (13) of the gas turbine (11).

3. A combined cycle power generation plant as claimed in Claim 1, characterized in that said stabilizing burner (25) provided in said waste heat recovery boiler (20) is constructed such that said stabilizing burner (25) is supplied with fuel from a fuel supply source which is different from a fuel supply source of a combustor (13) of the gas turbine (11).
